# EUROPEAN PATENT SPECIFICATION

(11) **EP 3 666 500 B1**
(45) Date of publication and mention of the grant of the patent: **27.10.2021**
(21) Application number: 18212417.2
(22) Date of filing: 13.12.2018
(51) Int. Cl.: B29C 64/112, B33Y 10/00, B33Y 30/00

(54) **A METHOD OF 3D INK JET PRINTING**
VERFAHREN ZUM 3D-TINTENSTRAHLDRUCKEN
PROCÉDÉ D'IMPRESSION À JET D'ENCRE EN 3D

(43) Date of publication of application: 17.06.2020
(73) Proprietor: Canon Production Printing Holding B.V., 5914 HH Venlo (NL)
(72) Inventor: IONASCU, Felicia G., 5914 CA Venlo (NL); FILIPPOVYCH, Kateryna, 5914 CA Venlo (NL); VAN DER MEER, René J., 5914 CA Venlo (NL)
(74) Representative: Canon Production Printing IP Department

(56) References cited:
- EP-A1- 0 852 536
- WO-A2-2008/151063
- US-A1- 2016 243 758
- US-A1- 2017 182 715

## Description

### BACKGROUND OF THE INVENTION

### 1. Field of the invention

The invention relates to a method of 3D ink jet printing, the method comprising a step of jetting out droplets of a curable liquid onto a substrate in positions that fit into a predetermined raster; and a step of radiation-controlled curing of the liquid, wherein the radiation is applied at spots that also fit into a predetermined raster.

### 2. Description of the Related Art

3D ink jet printing is a technique for forming three-dimensional objects by printing ink or another curable liquid in several superposed layers and then curing the ink, so as to build up the three-dimensional object. In order to be able to reproduce fine details of the object, it is desired that the printer used for printing has a high spatial resolution.

However, this implies that the nozzles of the print head have small dimensions, and consequently the volume of the ink droplets that are jetted out will also be small. Since, on the other hand, the frequency with which the droplets can be jetted out is limited, the productivity of the print process decreases with increasing resolution. A 3D ink jet printer is disclosed in U.S. Patent Application US 2017/182715.

It is an object of the invention to provide a 3D printing method which combines high productivity and high resolution.

### SUMMARY OF THE INVENTION

In the method according to the invention, in order to achieve this object, the raster that is employed in the curing step has a higher resolution than the raster employed in the jetting step.

The relatively coarse raster that is employed in the jetting step leads to a high productivity because a low-resolution printer can be employed which jets-out droplets that have a large volume and form relatively large macro pixels on the substrate or on the ink layer that has been printed earlier. Consequently, the body of cured ink can be built up quickly. However, since a finer raster is employed in the curing step, the curing process can be controlled so as to selectively cure only certain parts of the ink that forms the macro pixel. In this way, the macro pixel is divided into a plurality of micro pixels in which the ink is cured and a solid body is formed, whereas the rest of the liquid which has not been cured is allowed to flow off or is removed actively. In this way, the fine raster of the micro pixels permits to reproduce fine details of the object.

More specific optional features of the invention are indicated in the dependent claims.

The curable liquid, which hereinafter will be designated as "ink" for simplicity, may be of a type which is cured by being irradiated with a specific type of radiation, e.g. with UV light. In that case, only those micro pixels will be cured that are intended to become part of the object. In another embodiment, the ink may be of a type in which the curing process (which may be induced by radiation or heat) is inhibited when the liquid is exposed with a specific type of radiation, e.g. light with a predetermined frequency. In that case, only those micro pixels which are to be removed will be exposed with the curing inhibiting radiation.

The printer may comprise a plurality of print heads capable of printing with different types of ink in a single scan pass, so that the material composition and color of the three-dimensional object can be controlled as desired, at least with the spatial resolution of the coarse jetting raster. The term "print head", "printer" and derivatives thereof are to be understood to include any device or technique that deposits or creates material on a surface in a controlled manner.

A curing device for curing the ink with the resolution of the micro pixel raster may comprise a radiation source which emits a beam of radiation (e.g. UV light or an electron beam), and a controllable deflector which deflects the beam so as to direct it onto the micro pixels to be exposed. The curing device may be mounted adjacent to the print head and the deflector may be configured for scanning a range with the size of one macro pixel, so that, whenever a macro pixel has been printed, the deflector may be controlled to selectively cure the micro pixels that compose this macro pixel.

The method according to the invention may be used for example for printing teeth for dental protheses or for forming other medical protheses in high quality.

### BRIEF DESCRIPTION OF THE DRAWINGS

Embodiment examples will now be described in conjunction with the drawings, wherein:
- Fig. 1: is a schematic side view of a printing device, illustrating a printing method according to the invention;
- Figs. 2 to 5: are top plan views illustrating several stages of a print process according to the invention; and
- Fig. 6: is a schematic top plan view of a multi-ink print head assembly suitable for carrying out the method according to the invention.

### DETAILED DESCRIPTION OF EMBODIMENTS

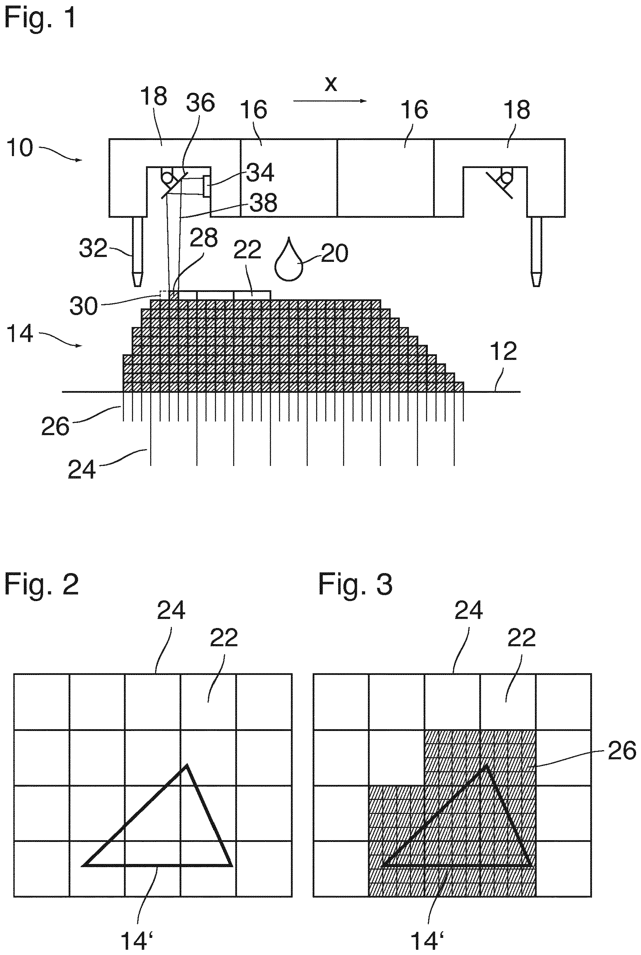

As is shown in Fig. 1, a printing system comprises a print head assembly 10 arranged in an adjustable height above a substrate 12 and controlled to move back and forth in a scanning direction x in order to print a three-dimensional object 14 on the substrate 12.

In the example shown, the print head assembly 10 has two print heads 16 for printing with different inks, and two curing devices 18 mounted on opposite sides of the print heads 16 in the scanning direction x. As is well known in the art, each print head 16 has at least one linear array of nozzles extending in the direction normal to the plane of the drawing in Fig. 1 and normal to the scanning direction x. Each nozzle is associated with an actuator, e.g. a piezoelectric actuator for jetting out droplets 20 of ink onto the substrate 12. As soon as the droplet 20 hits the substrate or a layer of ink that has been printed and cured earlier, it spreads horizontally and forms a macro pixel 22 of ink. The nozzles of the print heads 16 are controlled individually so as to determine the shape of the ink layer formed by the macro pixels 22.

The curing device 18 on the trailing side of the print head assembly is activated and controlled to expose the macro pixels that have just been printed with UV light in order to cure the ink. However, whereas the macro pixels 22 formed by the ink droplets fit into a relatively coarse raster 24 (shown below the substrate 12), the curing devices 18 are configured to expose the ink with a finer raster 26. In the example shown, the spatial resolution of the finer raster 26 is four times the resolution of the raster 24. Consequently, each macro pixel 22 is divided into 4x4 micro pixels 28 which can be exposed with UV light independently of one another. Thus, each macro pixel 22 may comprise micro pixels 28 that are exposed and cured (these micro pixels are hatched in the drawing) whereas other micro pixels are not exposed, so that the liquid will not be cured. A volume of liquid ink 30 that has not been cured has been shown in dashed lines in Fig. 1.
In the example shown, a suction nozzle 32 is provided for removing the liquid ink 30, so that only the cured micro pixels 28 remain and constitute the body of the object 14.

In the example shown, the curing device 18 has a light source 34 and a controllable deflector 36 (a pivotable mirror in this example). The light source 34 emits a beam 38 that is focused onto a spot on the object 14, the spot having a size corresponding to one micro pixel 28. The deflector 36 is controlled to deflect the beam 38 so as to expose only those micro pixels 28 that are to be cured.

It will be understood that the deflector 36 must be capable of exposing all 16 micro pixels of a macro pixel in the time in which the curing device moves over the macro pixel in the course of the scan movement. Sufficiently fast optical deflectors are available on the market. If the deflector is fast enough and the beam 38 has a sufficient intensity, it is also possible that a single curing device is provided for curing a plurality of macro pixels 22 that are printed with adjacent nozzles of the print head.

The principles of the invention will now be explained by reference to Figs. 2 to 5.

In Fig. 2, an object 14' to be printed has been drawn on the raster 24 that is constituted by the macro pixels 22. In this example, the object 14' has a triangular shape in top plan view.

In Fig. 3, the macro pixels that fill the shape of the object 14' and have to be printed with the print heads 16 have been shown as hatched squares. It can be seen that these macro pixels can render the triangular shape of the object 14' only very coarsely. For the macro pixels filling the shape of the object 14' in Fig. 3, the raster 26 of micro pixels has also been shown.

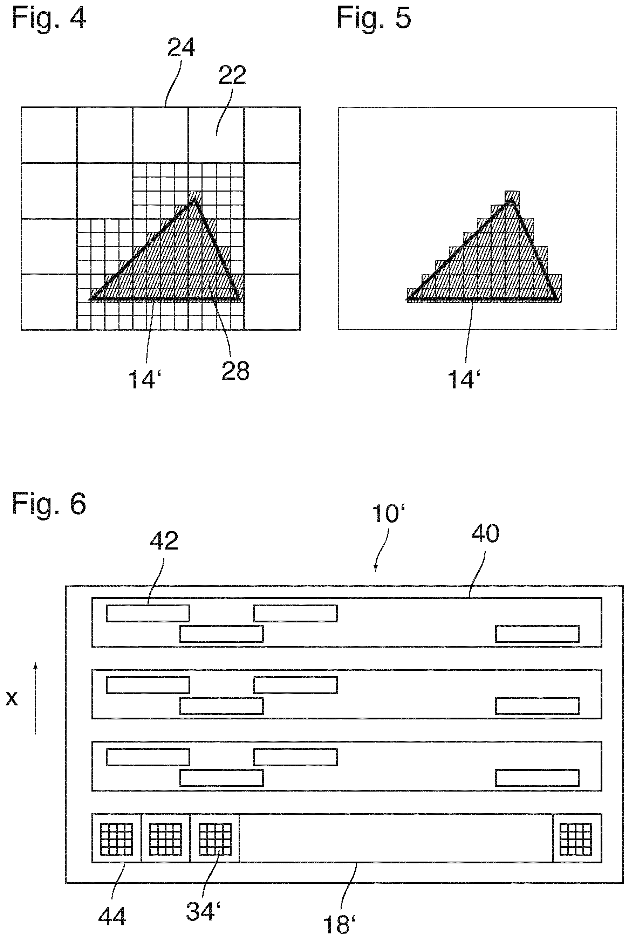

In Fig. 4, only those micro pixels 28 have been hatched which fill the shape of the object 14'. The micro pixels that have been left white in Fig. 4 will not be cured. It can be seen that the cured micro pixels 28 can render the shape of the object 14' with a much higher resolution and fidelity. Finally, as is shown in Fig. 5, the ink that has not been cured is washed or blown or sucked away, so that what is left is the object 14' which has almost exactly the desired shape.

It is not mandatory that the curing device has a deflector. In another embodiment, shown in Fig. 6, the curing device may be constituted by a matrix of individually controllable light sources that are arranged to selectively expose each micro pixel of the printed ink layer.

In the example shown in Fig. 6, a print head assembly 10', which may for example be a carriage moving in the scanning direction x (vertical in Fig. 6), has the three print heads 40 arranged in parallel to one another and extending in the direction transverse to the scanning direction over the entire width of the objects to be printed. Each print head 40 has a number of chips 42 forming a linear array of actuators and nozzles. The chips 42 are staggered in two rows, and as the carriage moves in the scanning direction, the chips are controlled with a suitable time offset, so that, together, the chips will print a continuous line of macro pixels fitting in the raster 24. The three print heads 40 operate with different inks.

A curing device 18' is constituted by a matrix of individually controllable light sources 34' formed on tiles 44 that cover the entire length of the print heads 40. The exposure spots formed by the individual light sources 34' fit into the fine raster 26 so that the exposure of each micro pixel is controlled individually.

In this example, only a single curing device 18' is provided for curing the ink that has been printed with any of the print heads 40.

In another embodiment, it is possible to provide a curing device and optionally a blower or suction device for removing the liquid ink on the trailing side of each individual print head 40, so that the material composition of the object to be printed can be controlled with the high spatial resolution of the fine micro pixel raster 26.

## Claims

1. A method of 3D ink jet printing, the method comprising a step of jetting out droplets (20) of a curable liquid onto a substrate (12) in positions that fit into a predetermined raster (24); and a step of radiation-controlled curing of the liquid, wherein the radiation is applied at spots that also fit into a predetermined raster (26), **characterized in that** the raster (26) that is employed in the curing step has a higher resolution than the raster (24) employed in the jetting step.

2. The method according to claim 1, wherein the step of radiation-controlled curing comprises exposing the liquid with radiation that causes the liquid to cure.

3. The method according to claim 1, wherein the step of radiation-controlled curing comprises exposing the liquid with radiation that inhibits the curing of the liquid.

4. The method according to any of the preceding claims, comprising a step of removing liquid that has been jetted out but has not been cured.

5. The method according to any of the preceding claims, wherein the step of radiation-controlled curing comprises directing a beam (38) of radiation onto a spot on the liquid that has been jetted out, and controlling a deflector (36) for deflecting the beam (38) so as to selectively cure a plurality of micro pixels (28) that contain liquid from a common droplet (20).

6. An ink jet printer for 3D printing, comprising a print head (16; 40) arranged to print macro pixels (22) in a predetermined raster (24), and a curing device (18; 18') for radiation-controlled curing of the ink, **characterized in that** the curing device (18; 18') is configured for selectively curing micro pixels (28) that form part of the same macro pixel (22) and are arranged in a fine raster (26) having a higher resolution than the raster (24) of the macro pixels.

7. The printer according to claim 6, comprising a plurality of print heads (16; 40) for printing with different liquids.

## Patentansprüche

1. Verfahren zum 3D-Tintenstrahldrucken, mit einem Schritt des Ausstoßens von Tröpfchen (20) einer aushärtbaren Flüssigkeit auf ein Substrat (12) in Positionen, die in ein vorbestimmtes Raster (24) passen, und mit einem Schritt der strahlungsgesteuerten Aushärtung der Flüssigkeit, wobei die Strahlung an Punkten aufgebracht wird, die ebenfalls in ein vorbestimmtes Raster (26) passen, **dadurch gekennzeichnet, dass** das Raster (26), das in dem Aushärtungsschritt verwendet wird, eine höhere Auflösung hat als das Raster (24), das in dem Ausstoßschritt verwendet wird.

2. Verfahren nach Anspruch 1, bei dem der Schritt des strahlungsgesteuerten Aushärtens das Bestrahlen der Flüssigkeit mit Strahlung einschließt, die das Aushärten der Flüssigkeit bewirkt.

3. Verfahren nach Anspruch 1, bei dem der Schritt des strahlungsgesteuerten Aushärtens das Bestrahlen der Flüssigkeit mit Strahlung einschließt, die das Aushärten der Flüssigkeit unterbindet.

4. Verfahren nach einem der vorstehenden Ansprüche, mit einem Schritt des Entfernens von Flüssigkeit, die ausgestoßen aber nicht ausgehärtet wurde.

5. Verfahren nach einem der vorstehenden Ansprüche, bei dem der Schritt des strahlungsgesteuerten Aushärtens einschließt, dass ein Strahl (38) der Strahlung auf einen Punkt auf der ausgestoßenen Flüssigkeit gerichtet wird und ein Deflektor (36) zum Ablenken des Strahls (38) so gesteuert wird, dass selektiv mehrere Mikropixel (28) ausgehärtet werden, die Flüssigkeit eines gemeinsamen Tröpfchens (20) enthalten.

6. Tintenstrahldrucker für 3D-Druck, mit einem Druckkopf (16; 40), der dazu ausgebildet ist, Makropixel (22) in einem vorbestimmten Raster (24) zu drucken, und einer Aushärtungseinrichtung (18; 18') zur strahlungsgesteuerten Aushärtung der Tinte, **dadurch gekennzeichnet, dass** die Aushärtungseinrichtung (18; 18') dazu konfiguriert ist, selektiv Mikropixel (28) auszuhärten, die Teil desselben Makropixels (22) sind und in einem feinen Raster (26) angeordnet sind, das eine höhere Auflösung hat als das Raster (24) der Makropixel.

7. Drucker nach Anspruch 6, mit mehreren Druckköpfen (16; 40) zum Drucken mit unterschiedlichen Flüssigkeiten.

## Revendications

1. Procédé d'impression à jet d'encre 3D, le procédé comprenant une étape de projection de gouttelettes (20) d'un liquide durcissant sur un substrat (12) dans des positions qui conviennent à une trame prédéterminée (24) ; et une étape de durcissement contrôlé par radiation du liquide, dans lequel la radiation est appliquée à des endroits qui conviennent également à une trame prédéterminée (26), **caractérisé en ce que** la trame (26) qui est employée dans l'étape de durcissement présente une résolution supérieure à la trame (24) employée dans l'étape de projection.

2. Procédé selon la revendication 1, dans lequel l'étape de durcissement contrôlé par radiation comprend l'exposition du liquide à une radiation qui cause le durcissement du liquide.

3. Procédé selon la revendication 1, dans lequel l'étape de durcissement contrôlé par radiation comprend l'exposition du liquide à une radiation qui empêche le durcissement du liquide.

4. Procédé selon l'une quelconque des revendications précédentes, comprenant une étape de retrait du liquide qui a été projeté mais n'a pas été durci.

5. Procédé selon l'une quelconque des revendications précédentes, dans lequel l'étape de durcissement contrôlé par radiation comprend la direction d'un faisceau (38) de radiation sur un endroit sur le liquide qui a été projeté, et la commande d'un déflecteur (36) pour dévier le faisceau (38) de sorte à durcir sélectivement une pluralité de micropixels (28) qui contiennent du liquide d'une gouttelette commune (20).

6. Imprimante à jet d'encre pour impression 3D, comprenant une tête d'impression (16 ; 40) agencée pour imprimer des macropixels (22) dans une trame prédéterminée (24), et un dispositif de durcissement (18 ; 18') pour le durcissement contrôlé par radiation de l'encre, **caractérisé en ce que** le dispositif de durcissement (18, 18') est configuré pour durcir sélectivement des micropixels (28) qui forment une partie du même macropixel (22) et sont agencés dans une trame fine (26) présentant une résolution supérieure à la trame (24) des macropixels.

7. Imprimante selon la revendication 6, comprenant une pluralité de têtes d'imprimante (16 ; 40) pour l'impression avec différents liquides.
